# EUROPEAN PATENT APPLICATION

(11) **EP 4 561 132 A1**
(43) Date of publication of application: **28.05.2025**
(21) Application number: 23307026.7
(22) Date of filing: 22.11.2023
(51) Int. Cl.: H04W 12/06, H04W 12/40, H04W 8/20, H04W 12/30

(54) **A METHOD FOR INSTALLING A PROFILE ON AN EMBEDDED SIM**

(71) Applicant: THALES DIS FRANCE SAS, 92190 Meudon (FR)
(72) Inventor: DEMARTY, Joêl, 35520 MONTREUIL LE GAST (FR); LELOUP, Laurent, 13124 PEYPIN (FR)
(74) Representative: Lotaut, Yacine Diaw

(57) **Abstract**

A virtual bound profile, created by the steps of generating by an In-Factory Binding Box a virtual eSIM, wherein the virtual eSIM comprises a virtual eSIM identifier and a virtual one-time key pair, wherein the virtual one-time key pair includes a virtual one-time public key and a virtual one-time private key; preparing by the In-Factory Binding Box an output file comprising the virtual elD and the virtual one-time public key of the virtual IFPP Key that corresponds to the virtual eSIM, and binding by a profile manager the virtual one-time public key of the output file with a profile to form the virtual bound profile. Other aspects are discussed.

## Description

### Field of Use

The present disclosure concerns a method and system for provisioning an MNO profile in an embedded SIM, and specifically for securely obtaining and storing a profile.

### Background

An embedded subscriber identity module (eSIM) is a secure element that is not removable from a device within which it operates and which can be remotely provisioned with mobile network operator (MNO) credentials. The device can be a smartphone, a PC, an automobile, or an IoT device, for example.

The initial MNO profile (or Provisioning Profile) is usually loaded in a Global System for Mobile Communications Association (GSMA)-certified secure location at the embedded SIM manufacturer premises to protect the MNO sensitive assets and to avoid SIM cloning. A device manufacturer (or Original Equipment Manufacturer (OEM), or device maker) building devices with cellular connection for different regions of the world will then request that the eSIM manufacturer creates different product references (Stock Keeping Unit) with different MNO subscriptions for different countries. For stock management issues, device manufacturers aspire to have a single Stock Keeping Unit, and the capability to load the profiles at the latest possible stage of production, rather than managing several stocks of different references, each having a different MNO subscription.

GSMA proposed the SGP.41 standard to describe the architecture of a late binding solution, called In-Factory Profile Provisioning, using a remote Subscription Manager Data Preparation factory (SM-DPf) to prepare MNO profiles. An issue with this proposal is that the correspondence between physical eSIM and pre-loaded one-time keys shall be kept all along the production steps, from eSIM manufacturers up to the latest stage of the cellular device production, where the eSIM will need to be personalized. This is both an issue for eSIM manufacturers and for device manufacturers because it increases the complexity of the manufacturing process, as well as potentially increasing the production time and requiring some amount of advanced planning.

### Summary

Accordingly, there is a need for a way to facilitate provisioning an eSIM with a profile without knowing the one-time keys that are in each of the eSIM that the device maker intends to personalize. Thus, the disclosure proposes to address the issue by allowing a late binding of the bound profile package with eSIM keys, without needing to know the eSIM one-time keys of the eSIMs which are in stock at device manufacturer storage.

An aspect of the present disclosure is directed toward a virtual bound profile, created by the steps of generating by an In-Factory Binding Box a virtual eSIM, wherein the virtual eSIM comprises a virtual eSIM identifier and a virtual one-time key, wherein the virtual one-time key comprises a one-time public key and a one-time private key, preparing by the In-Factory Binding Box an output file comprising the virtual eID (veID) and the one-time public keys of the virtual IFPP Keys (vIFPP) that corresponds to the virtual eSIMs, and binding by a profile manager the one-time public keys of the output file with a profile to form the virtual bound profiles.

In an aspect of the disclosure, the In-Factory Binding Box transmits the output file to an intermediary system and the intermediary system transmits the output file to the profile manager.

In an aspect of the disclosure, the profile is generated by the profile manager.

In an aspect of the disclosure, the virtual bound profile is stored within a secure storage of the In-Factory Binding Box.

An aspect of the disclosure is directed toward a method for installing a profile in an embedded SIM, the method comprising selecting a virtual bound profile by an In-Factory Binding Box; receiving, by the In-Factory Binding Box, a one-time public key of a real one-time key pair associated with the embedded SIM; matching a virtual one-time private key of a virtual one-time key pair to a virtual one-time public key of the bound profile; unbinding, by the In-Factory Binding Box the bound profile that is associated with the virtual one-time public key to obtain the profile; binding the profile to the received real one-time public key of the real one-time key pair to obtain a real bound profile; deleting the virtual bound profile and the virtual one-time key pair; and installing on the embedded device the real bound profile.

In an aspect of the disclosure, the profile is received from profile manager.

In an aspect of the disclosure, the virtual bound profile is stored in a secure database within the In-Factory Binding Box.

An aspect of the present disclosure is directed toward a system for installing a profile in an embedded SIM, the system comprising a profile manager configured to generate a profile, receive from an In-Factory Binding Box an output file, bind a virtual public key of a virtual one-time asymmetric key pair of the output file with the profile to form a virtual bound profile, and transmit the virtual bound profile to the In-Factory Binding Box; and the In-Factory Binding Box.

An aspect of the present disclosure is directed toward an In-Factory Binding Box, comprising a processor; and secure memory storing one or more programs configured to be executed by the one or more processors, the one or more programs including instructions for generating and storing a virtual eSIM, wherein the virtual eSIM comprises a virtual identifier and a virtual one-time key pair, wherein the virtual one-time key pair comprises a virtual one-time public key and a virtual one-time private key; forming an output file from the virtual identifier and the virtual one-time public key; transmitting the output file to a profile manager, wherein the profile manager will create from the output file a virtual bound profile; receiving the virtual bound profile from the profile manager that is associated with the virtual eSIM, the virtual bound profile being bound to the corresponding virtual one-time public key from the output file; storing the virtual bound profile in a secured storage; receiving for each real embedded SIM a real embedded SIM identifier and a real one-time public key of a real one-time key pair; unbinding the virtual bound profile retrieved from secured profile database with the virtual one-time private key stored by the In-Factory Binding Box to obtain the profile, and re-binding the profile to the real one-time public key associated with the real embedded SIM; and sending the real bound profile to the embedded SIM to be installed.

In an aspect of the disclosure, communication with the profile manager is made via an intermediary system.

In an aspect of the disclosure, the In-Factory Binding Box is not connected to any external system apart from the intermediary system.

In an aspect of the disclosure, the virtual bound profile is a batch of virtual bound profiles.

An advantage of the embodiments discussed by the disclosure is that it does not compromise security as each profile is always bound to a unique one-time key, whether virtual one-time keys when stored in the secured database of the Binding Box or real one-time keys when sent to the eSIM, avoiding then the need to perform a GSMA SAS-UP certification of the device manufacturer.

Furthermore, the unbinding from virtual one-time key and re-binding to real one-time key, is a quick operation, as all other operations may be performed offline. The production line throughput will then not be impacted by this process.

### Description of the Drawings

For a better understanding of the various described embodiments, reference should be made to the Description of Embodiments below, in conjunction with the following drawings in which like reference numerals refer to corresponding parts throughout the figures.
FIG. 1 represents an exemplary block diagram of an In-Factory Binding Box;
FIG. 2 represents an exemplary system for producing a virtual bound profile;
FIG. 3 represents an exemplary system for installing a profile on an eSIM;
FIG. 4 represents an exemplary method for producing a virtual bound profile; and
FIG. 5 represents an exemplary method for installing a profile on an eSIM.

### Detailed Description

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The following description includes references to various methods executed by a processor of an integrated circuit chip. As is common in the field, there may be phrases herein that indicate these methods or method steps are performed by software instructions or software modules. As a person skilled in the art knows, such descriptions should be taken to mean that a processor, in fact, executes the methods, software instructions, and software modules.

As previously discussed, an eSIM needs a profile to connect to a network, such as that managed by a mobile network operator (MNO). It is possible that there are separate entities that manufacture the eSIM and that manage the profiles. It is important that the profiles and eSIMs both receive a great deal of security. If the profile or eSIM were to be comprised, it could lead to many issues for the end user and/or manufacturers. For instance, if the eSIM and/or profile were to be "cloned," i.e., copied, such as by a hacker, it could allow the hacker to be able to take control, track, monitor, and listen to calls or texts of the device.

In order to prevent these sorts of outcome, the eSIM and profile are carefully controlled so that, in general, a profile is matched to an eSIM. However, this introduces more complexity into the manufacturing process, as the eSIM in some form is essentially sent to the profile manager to install the profile. At the very least, a profile cannot be obtained by the manufacturer until they have the identifying information of the eSIM, as further discussed herein, in order to securely match the eSIM with the profile. This can also prolong the production, since these operations would need to be done sequentially (e.g., obtain the eSIM identification information, transmit it to the profile manager, produce the requisite profiles, etc.).

Thus, aspects of the present disclosure are directed toward various systems and methods that allow the manufacturer to disassociate the eSIM from the profile while still ensuring that the security of both are preserved. In an aspect, a "virtual eSIM" is used by the manufacturer. The virtual eSIM allows the manufacturer to communicate with the profile manager and obtain from them a profile without the need for the identifying information of a physical eSIM. Thus, the manufacturer can reduce the full timeframe of production by "multitracking" the processes of obtaining the profile and producing the eSIM. This also gives the manufacturer additional flexibility in anticipating an unexpected or unknown quantity of eSIMs to be produced. Another aspect is directed toward an In-Factory Binding Box that allows the manufacturer to securely store and manage such sensitive aspects and operations of the process, potentially within the manufacturer's facility. These and other aspects and advantages of the disclosures are thus discussed herein.

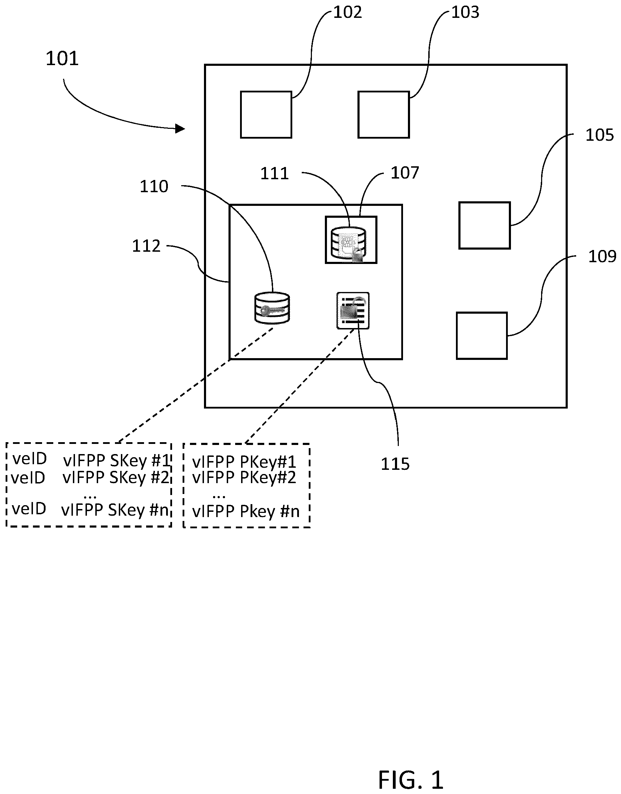

Figure 1 demonstrates a block diagram of an In-Factory Binding Box 101 (hereinafter, "IFBB") in accordance with the present disclosure. The various components shown in FIG. 1 are implemented in hardware, software, or a combination of both hardware and software, including one or more signal processing and/or application-specific integrated circuits. The IFBB 101 may include memory 102, a processor 103, an I/O module 105, an eSIM management module 109, and a database management system 112. It should be understood that these aspects described are representational, which is to say, that the aspects may be distributed within one contained system or across several systems that are otherwise linked, so as to provide the described functionality. For example, the processor 103 may be present as a single processor 103 within the IFBB 101, multiple processors 103 within the IFBB 101, and/or a distributed network of processors 103. That is to say, IFBB 101 and the associated components and modules can be implemented on one or more standalone data processing devices or a distributed network of computers. The modules may be physical hardware components within the system and/or software components designed to carry out the functionality of the module, such as APIs. In some examples, IFBB 101 can employ various virtual devices and/or services of third-party service providers (e.g., third-party cloud service providers) to provide the underlying computing resources and/or infrastructure resources of IFBB 101.

The processor 103 may be understood to be hardware that runs the computer program code. "Processor" may be synonymous with terms like controller and computer and should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other devices.

Memory 102 can include any electronic, magnetic, optical, electromagnetic, infrared, or semiconductor system, apparatus, or device, a portable computer diskette (magnetic), a random access memory (RAM) (magnetic), a read-only memory (ROM) (magnetic), an erasable programmable read-only memory (EPROM) (magnetic), a portable optical disc such as CD, CD-R, CD-RW, DVD, DVD-R, or DVD-RW, or flash memory such as compact flash cards, secured digital cards, USB memory devices, memory sticks, and the like. In some examples, a non-transitory computer-readable storage medium of memory 102 can be used to store instructions (e.g., for performing some or all of processes, described below) for use by or in connection with an instruction execution system, apparatus, or device, such as a computer-based system, processor-containing system, or other system that can fetch the instructions from the instruction execution system, apparatus, or device, and execute the instructions. In other examples, the instructions can be stored on a non-transitory computer-readable storage medium of IFBB 101 or can be divided between the non-transitory computer-readable storage medium of memory 102 and the non-transitory computer-readable storage medium of IFBB 101. A "non-transitory computer readable storage medium" can be any medium that can contain or store the program for use by or in connection with the instruction execution system, apparatus, or device.

An I/O module 105 can be used to couple input and output peripherals of the device to memory 102 and processor 103, such as a keyboard, speakers, monitor, mouse, microphone, etc, when needed.

The IFBB includes a database management system 112 to securely store and manage a secure storage 107 that may be used to store a set of bound profiles 111, such as a mobile network operator (MNO) profile and/or a bound profile package received from a profile manager (described herein), and a database 110, 115 of virtual eSIMs. The virtual eSIMs may include virtual eSIM identifiers (velDs) and their corresponding virtual one-time key pairs, which may be one-time asymmetric key pairs. For example, a first database 110 may include a set of virtual eSIM identifier velDs and their corresponding virtual private keys of the virtual one-time key pairs (vIFPP SKey #1, vIFPP SKey #2, ... vIFPP SKey #n). A second database 115 may include a set of virtual public keys of the virtual one-time key pairs (vIFPP PKey #1, vIFPP PKey #2, ... vIFPP PKey #n) that corresponds to the virtual eSIM identifiers and virtual private keys. The data management system 112 may have a key management system to store and manage the keys and certificates require to perform the binding/unbinding operations of the MNO profile. The key management system may also perform all cryptographic operations (one-time keys generation, binding and unbinding operations on MNO profiles, database protection...). The data management system 112 may have a hardware security module used to protect said databases in integrity and confidentiality.

The eSIM management module 109 may have various Application Programming Interfaces (APIs) to manage various operations of the eSIM management module 109. For instance, an API may retrieve a number of virtual eSIMs, including the virtual eSIM identifiers and virtual one-time public keys, from the one-time virtual key pairs stored by the database management system 112; an API may read a file received from a profile manager and store a corresponding Bound Profile Package in the secure storage 107; an API to retrieve a Bound Profile Package from the profile database 107, unbind the profile from the virtual one-time key, re-bind it with a real one-time key from a real embedded SIM, and send it to the eSIM Factory Profile Assistant. The eSIM management module 109 may allow the IFBB 101 to generate the virtual eSIMs, including the virtual eSIM identifiers eID and their corresponding virtual one-time key pairs. Alternatively, or additionally, the eSIMs may be generated outside of the IFBB 101, such as, for example, on the IFBB 101 manufacturer site in a secure location (such as a site that has received a comprehensive security audit) and then loaded into the IFBB 101.

In an embodiment, the eSIM management module 109 may include an API to retrieve a batch of virtual eSIMs, which may be composed of virtual eSIM identifiers and virtual one-time public keys, from the virtual one-time key pair and virtual eSIM identifiers generated on-the-fly by the IFBB 101 and stored in the database management system 112; alternatively, or additionally, the eSIM management module 109 may include an API to generate virtual eSIMs that may be composed of virtual eSIM identifiers and virtual one-time key pair, and store the virtual eSIMs on database management system 112.

In an embodiment, the IFBB 101 may include a secure network module that is configured to provide a network connection with another system, such as a system on an internal network, while excluding access from third parties. For instance, it may be desirable for the IFBB 101 to be disconnected from an external network, such as the internet, while still maintaining the capability to transmit and receive data from a specific internal and/or external system. Thus, the secure network module may provide a connection to a specific system while excluding all other access. This may be accomplished via a "hard," i.e. physical, connection, such as a network cable that directly connects the IFBB 101 to the external system. It is also conceived that the secure connection may be maintained indirectly, such as through a secure router, and/or through a wireless network, such as WiFi, Bluetooth^{®}, etc. The connection may be time-limited, such that the secure network module may primarily and/or only operate the connection during a transfer and otherwise remain in a disconnected state.

In an aspect of the disclosure, the IFBB 101 does not maintain an external network connection at all. Thus, the IFBB 101 is configured to externally transfer any requested files. For instance, the IFBB 101 may interact with an external hardware store device, such as a USB key, which may be manually operated and/or transported by an operator. The "secure connection" referred to within this application may refer to the secure transfer of files via either of these means, i.e., a direct network connection or the manual operation described.

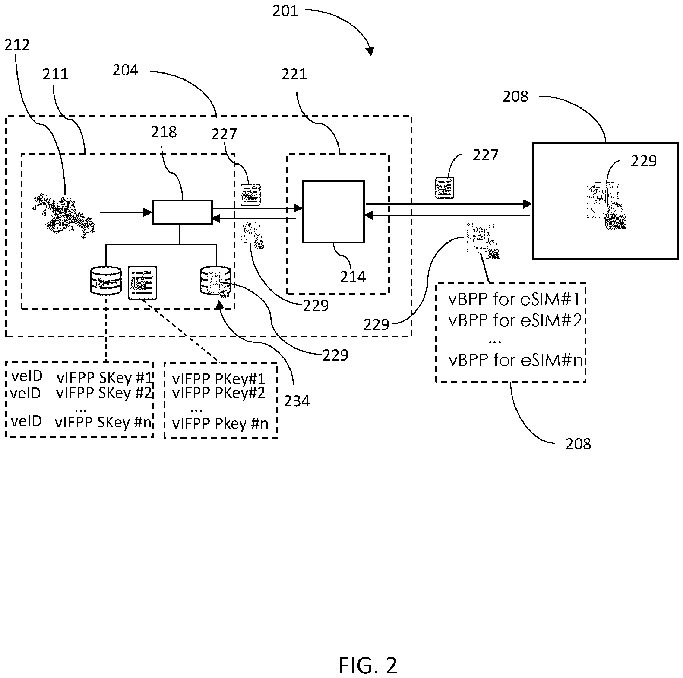

FIG. 2 demonstrates a system 201 for creating virtual bound profiles 229. The system may include a manufacturer 204 and a profile manager 208. The manufacturer 204 may be a manufacturer of electronic devices, discussed herein. For instance, the manufacturer 204 may be a producer of smart meters, cars, health devices, tracking devices, mobile communication devices, etc. This type of manufacturer 204 is typically referred to as an Original Equipment Manufacturer (OEM) and will usually take the different elements of the bill of materials to produce the desired device. It is possible that each element of the bill of materials may be delivered to the manufacturer 204 by different suppliers. For instance, the supplier of the eSIM is typically called an eUICC Manufacturer (EUM). In this example, the manufacturer 204 may receive the eSIM from the eSIM supplier (EUM), the resistors from resistor supplier, etc., and store these elements, such as in a manufacturer 204 warehouse.

The manufacturer 204 may include a production line 211 and an intermediary system 214. The production line 211 is where the manufacturer 204 will take the different elements of the bill of materials to produce the device. For example, the elements may be the Printed Circuit Board (PCB), all the components that will be soldered on the PCB (capacitors, resistors, microcontroller, eSIM,), screens, buttons, cases, etc. When the manufacturer 204 is ready to produce the final devices, the manufacturer 204 will take all these elements, such as from the warehouse, and bring them to the production line 211, where they may be assembled on an assembly line 212.

The production line may include an IFBB 218, such as the IFBB 218 described previously in reference to FIG. 1. The manufacturer may be arranged such that the production line 211 and the intermediary system 214 are connected and/or in communication with each other; however, the production line may be disconnected from any other external network. The intermediary system 214 may be located in a remote location 221 from the production line 211, and the intermediary system 214 may be connected to an external network. In this way, the intermediary system 214 may act as a firewall between the production line 211 (specifically the binding box 218) and the external network.

The IFBB 218 may be configured to produce an output file 227. The output file 227 may contain the public key of the virtual one-time asymmetric key and the corresponding velD. The output file may be sent to the intermediary system 214 by the IFBB 218 via the secure connection.

The intermediary system 214 may be, for instance, a production office, i.e., a regular desktop environment with an internet connection. The intermediary system 214 may receive the output file 227 from the IFBB 218 and forward it to the profile manager 208. So as to maintain the security of the IFBB 218, the intermediary system 214 may maintain a connection with the IFBB 218 that is separate from the connection with the profile manager 208. For example, the intermediary system 214 may connect to the IFBB 218, receive the output file 227, disconnect from the IFBB 218, connect to the profile manager 208, and transmit to the profile manager 208 the output file 227. In this way, there is no connection between the IFBB 218 and the "outside world," i.e., external access apart from what is specifically sanctioned by the manufacturer, save for what is conducted through the intermediary system 214. The inverse process is also considered, i.e., for when the intermediary system 214 is receiving a file from the profile manager 208. Other manners of firewalling between the IFBB 218 and the outside world are considered.

In an aspect of the disclosure, the production line 211 may itself maintain an external network connection. In this case, the intermediary system 214 may be unnecessary as the IFBB 218 can communicate directly with the profile manager 208, such as through an internet connection.

The profile manager 208 may be a server that manages subscription management functions for a connected device. For instance, the profile manager 208 may prepare (generate and/or stores) SIM profiles that allow the connected device to connect to a given network. For example, the profile manager 208 may be a Subscription Manager Data Preparation (SM-DP/SM-DP+) server. The profile manager 208 may be specifically a provisioning server for preparing default profiles for the connected devices. These default profiles may be used, for instance, in allowing an IoT device to connect to a wireless network when the IoT device is initially launched.

The profile manager 208 may form a virtual bound profile 229 by combining a profile prepared by the profile manager 208 with the velD and the associated virtual public key of the virtual one-time key pair, as received in the output file 227. The virtual bound profile 229 may be transmitted to the IFBB 218, such as via the intermediary system 214, where it may be stored in secure storage 234.

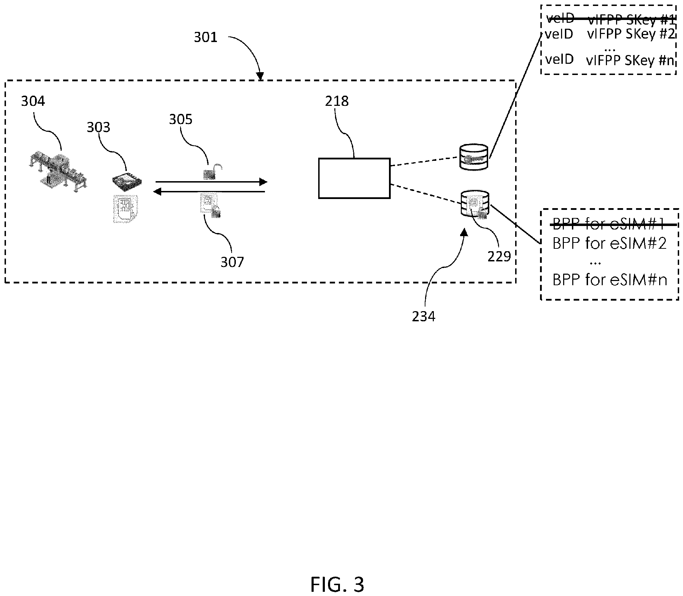

FIG. 3 demonstrates a system 301 for converting a virtual bound profiles into a "real" bound profile and installing said profile onto an eSIM 303. As previously discussed, the IFBB 218 has a virtual bound profile 229 stored in a secure storage 234. The IFBB 218 may receive a request to provision an eSIM. The request may contain a real public key of a real asymmetric one-time key pair associated with the eSIM, such as an eSIM that is on the assembly line 304. The eSIM 303 may select the virtual bound profile 218 and unbind the profile from the virtual bound profile 218 using the virtual private key of the virtual one-time key pair associated with the virtual bound profile 229. The IFBB 218 may then bind the profile to the public key of the real one-time key pair associated with the eSIM 303 to form the real bound profile 307. The real bound profile 307 may be installed on the eSIM 303, where it may be unlocked by the real private key of the real one-time key pair to access the profile stored within the real bound profile 307. This profile, once installed on the eSIM 303, may allow the eSIM 303 to connect to a given network.

After the virtual bound profile 229 has been unbound, substantially all data related to the virtual bound profile 229 may be erased from the IFBB 218. For example, the virtual bound profile 229, the virtual one-time asymmetric key pair, the virtual EID, and the associated profile may all be erased from the IFBB 218, so as to prevent any inadvertent or otherwise reutilization of the same data for a different device. In an example where the IFBB 218 includes a batch of virtual bound profiles, the data of the virtual bound profile that was selected for installation onto the eSIM 303 may be deleted, maintaining the remainder of the batch for future installation.

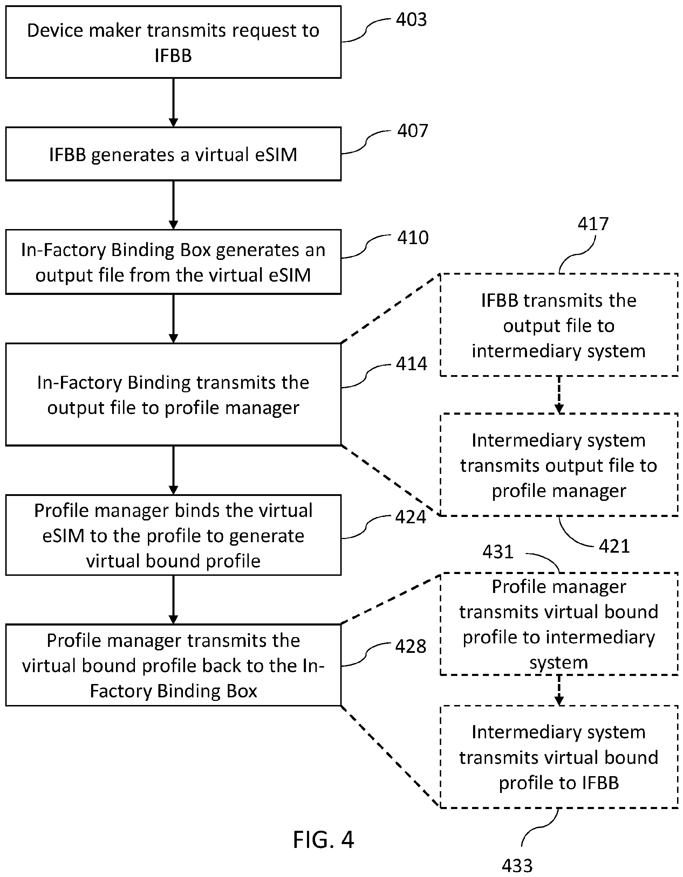

FIG. 4 demonstrates an exemplary flowchart of a process for creating a virtual bound profile. A device maker may determine to prepare a quantity of connected devices for production. These devices may be a computing device such as a laptop computer, a tablet, a telephone, a media player, or other portable electronic device, a wearable device, a headphone, an embedded device, a television, a gaming device, a navigation device, equipment that implements the functionality of two or more of these devices, or other electronic equipment. Also considered are any other type of electronic computing device having wireless communication capability that can include communication via one or more wireless communication protocols such as used for communication on: a wireless wide area network (WWAN), a wireless metro area network (WMAN) a wireless local area network (WLAN), a wireless personal area network (WPAN), a near field communication (NFC), a cellular wireless network, a fourth generation (4G) Long Term Evolution (LTE), LTE Advanced (LTE-A), fifth generation (5G), and/or sixth generation (6G) or other present or future developed advanced cellular wireless networks. Other types of network-linked systems and devices are considered as well, such as, for instance, vehicles and M2M devices, so long as they are providing an interface to interact with an end-user and a network connection. Each device may have an associated embedded SIM.

The device maker may desire to match each device with a profile. Put another way, the device maker may desire to match each embedded eSIM with a profile. For instance, a device with multiple embedded eSIMs may be associated with multiple profiles such that each embedded eSIM is matched with a corresponding profile. The virtual eSIM may include a virtual eSIM identifiers eID and a corresponding virtual one-time key pair. Thus, each eSIM identifier eID and each virtual one-time key pair may correspond to a device.
It should be understood that although the process for a single profile, device, virtual eSIM, etc., will be outlined herein in order to make clear the correspondence between said features, the process (and all methods and systems thus described) could apply for a batch of requests, profiles, devices, virtual eSIMs, real eSIMs, etc., and is easily contemplated and understood from the disclosure. The device maker may thus transmit a request to an IFBB to generate a profile for each device, as at Step 403. In an aspect of the disclosure, IFBB may be installed in the premises of the device maker, such as on the production line.

In step 407, The IFBB may generate a virtual eSIM. In an aspect of the disclosure, virtual eSIM(s) may be pre-generated, such that they were generated prior to the request and are stored by the IFBB. In an aspect of the disclosure, the virtual eSIMs may be uncorrelated to physical eSIMs. For example, a virtual eSIM may be generated that has no physical counterpart at the time of creation. A virtual eSIM may include a virtual eSIM identifier and a corresponding virtual one-time key pair. This process may take place before, during, and/or after the device maker has ordered eSIMs, such as to be embedded into the device, from the EUM. That is to say, the device maker may send a request to the EUM to receive physical eSIMs from the EUM, with each eSIM being loaded with a real one-time asymmetric key pair and an eSIM identifier by the EUM. Stated differently, this request may be decoupled from the above process, such that the manufacturer may separately obtain the virtual bound profile and obtain the eSIM without correlating between the two or having to plan ahead. Further, this also allows the manufacturer freedom from determining in advance a quantity of eSIMs and/or profiles that may be needed, as sufficient virtual profiles may be used to account for a future demand in eSIMs.

In response to the request, the IFBB may prepare an output file, such as at step 410. The output file may contain the public key of the virtual one-time asymmetric key and the virtual eSIM identifier.

In step 414, the output file may be transmitted to a profile manager to obtain a profile for the virtual eSIM. For instance, the output file may be first transmitted to an intermediary system that is in communication with a profile manager, such as at step 417. For example, the output file may be transmitted outside of the production line, which does not have an internet connection or is otherwise firewalled from external networks for security purposes, to another part of the factory, which does have an internet connection or otherwise is in communication with an external network. Alternatively, or additionally, the output file may be transmitted outside the factory, so long as the system that receives the output file acts as a buffer between the IFBB and the profile manager. Alternatively, or additionally, it is considered that IFBB, and/or a portion of the IFBB may be moved and/or changed from a state in which the IFBB does not have a connection with the profile manager to a state in which the IFBB does have a connection with the profile manager, such as by moving the IFBB, through software means such as toggling a network connection, and/or through hardware means such as through attaching a network cable.

The intermediary system may transmit the output file to the profile manager, such as at step 421. Although the virtual eSIM identifier eID is "synthetic," in that it may not literally correspond with a physical eSIM, it may appear "authentic" to the profile manager, meaning that the profile manager may not be able to detect that the eSIM identifier eID is synthetic. Thus, the profile manager may bind the virtual eSIM identifier eID with a profile to create a "virtual" bound profile, such as at step 424. That is to say, the profile is authentic but it is bound to the virtual eSIM identifier eID, which is synthetic. The profile may be a provisioning profile, such that, for example, the provisioning profile is an initial profile for devices that allows the device to connect to a network without having to establish a direct connection between the device and the profile manager. The profile manager may generate the profile with MNO unique data. Alternatively, or additionally, the profile manager may retrieve a previously generated unbound profile.

The profile manager may bind the profile by "locking" the virtual bound profile with the provided public key of the virtual one-time key pair such that the contents of the virtual bound profile may only be accessed with the corresponding virtual private key of the virtual one-time key pair. For instance, the profile manager may bind each entry of the profile (including MNO data such as IMSI, Ki, OPc, File System, applets, etc.) to the virtual public key.

In step 428, the virtual bound profile may be returned to the manufacturer, such as via the intermediary system, as show in Step 431 wherein the profile manager transmits the virtual bound profile to the intermediary system, and in step 433 where the intermediary system transmits the virtual bound profile to the IFBB. The virtual bound profile may be stored by the IFBB.

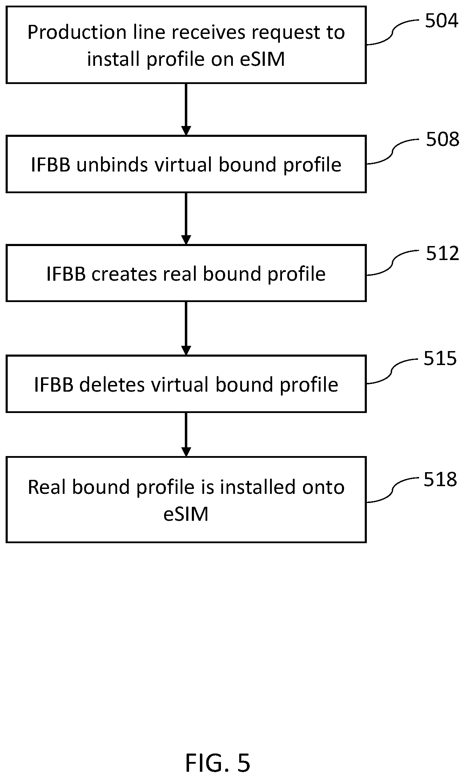

FIG. 5 demonstrates an exemplary flowchart of a process installing a profile from a virtual bound profile into an eSIM. In STEP 504, the production line may receive a request to install a profile on a physical eSIM. The production line is thus in communication with the physical eSIM either directly via ISO interface or through an agent (called Factory Profile Assistant or FPA in SGP.41 specification) located in the device containing the eSIM or located on a test PC connected to the device being manufactured. In STEP 508, The IFBB may "unlock" the virtual bound profile by using the virtual private key of the virtual one-time key pair that matches the virtual public key of the virtual bound profile. The IFBB may locate said corresponding virtual private key by using the virtual private key that is associated with the virtual eSIM identifier eID of the virtual bound profile. Thus, the IFBB is able to unbind the profile from the virtual bound profile. In an aspect of the disclosure wherein the IFBB stores several virtual bound profiles in the secure storage, the IFBB may thus select one of the several virtual bound profiles for unbinding. The selection may be, for example, made at random.

In STEP 512, IFBB may then bind the profile with a real public key of a real one-time key pair that is associated with the physical eSIM to create a "real" bound profile, which is to say, a bound profile that corresponds to the physical eSIM. The real public key may be transmitted to the IFBB and the corresponding real private key of the real one-time key pair may be stored on the eSIM so that they correspond. The IFBB may then delete any data related to the virtual bound profile and/or virtual eSIM that were used so as to prevent cloning, such as at STEP 515. In STEP 518, the real bound profile may be installed onto the corresponding physical eSIM using SGP.41/SGP.42 protocols. The corresponding physical eSIM contains the real private key of the real one-time key pair that is able to unlock the real bound profile, allowing the profile to be loaded into the eSIM of the device.

Although specific embodiments of the invention have been described and illustrated, the invention is not to be limited to the specific forms or arrangements of parts so described and illustrated. The invention is limited only by the claims.

## Claims

1. A virtual bound profile (227), created by the steps of:
Generating by an In-Factory Binding Box (101; 218) a virtual eSIM, wherein the virtual eSIM comprises a virtual eSIM identifier (veID) and a virtual one-time key, wherein the virtual one-time key comprises a virtual one-time public key and a virtual one-time private key;
preparing by the In-Factory Binding Box (101; 218) an output file (227) comprising the virtual eID (veID) and the virtual one-time public key of the virtual IFPP Key (vIFPP) that corresponds to the virtual eSIM, and
binding by a profile manager (208) the virtual one-time public key of the output file (227) with a profile to form the virtual bound profile (229).

2. The virtual bound profile of claim 1, further comprising that the In-Factory Binding Box (101) transmits the output file (227) to an intermediary system (214) and the intermediary system (214) transmits the output file to the profile manager (208).

3. The virtual bound profile of claims 1 or 2, wherein the profile is generated by the profile manager (208).

4. The virtual bound profile of claims 1-3, further comprising that the virtual bound profile (229) is stored within a secure storage (107; 234) of the In-Factory Binding Box (101).

5. A method for installing a profile in an embedded SIM (303), the method comprising:
selecting a virtual bound profile (229) according to claim 1 by an In-Factory Binding Box (101; 218),
receiving, by the In-Factory Binding Box (101), a public key (305) of a real one-time key pair associated with the embedded SIM (303),
matching a virtual one-time private key of a virtual one-time key (vIFPP) to a virtual one-time public key of the bound profile (229),
unbinding, by the In-Factory Binding Box (101; 218) the virtual bound profile (229) that is associated with the virtual one-time public key to obtain the profile,
binding the profile to the received real one-time public key (305) of the real one-time key pair to obtain a real bound profile (307),
deleting the virtual bound profile (229) and the associated virtual one-time key pair, and
installing on the embedded SIM (303) the real bound profile (307).

6. The method according to claim 5, wherein the profile is received from a profile manager (208).

7. The method of according to claim 5 or 6, wherein the virtual bound profile (229) is stored in a secure storage (107; 234) of the In-Factory Binding Box (101; 218).

8. A system for installing a profile in an embedded SIM (303), the system comprising:
a profile manager configured to:
generate a profile,
receive from an In-Factory Binding Box (101; 218) an output file (227), bind a virtual one-time public key of a virtual one-time asymmetric key pair of the output file (227) with the profile to form a virtual bound profile (229), and
transmit the virtual bound profile (229) to the In-Factory Binding Box (101; 218); and
the In-Factory Binding Box (101; 218) configured to carry out the method of claim 5.

9. An In-Factory Binding Box (101; 218), comprising:
a processor (103); and
memory (102) storing one or more programs configured to be executed by the processor (103), the one or more programs including instructions for:
generating and storing a virtual eSIM, wherein the virtual eSIM comprises a virtual identifier (veID) and a virtual one-time key pair, wherein the virtual one-time key pair comprises a virtual one-time public key and a virtual one-time private key;
forming an output file (227) from the virtual identifier (veID) and the virtual one-time public key;
transmitting the output file (227) to a profile manager (208), wherein the profile manager will create from the output file (227) a virtual bound profile (229);
receiving the virtual bound profile (229) from the profile manager (208) that is associated with the virtual eSIM, the virtual bound profile (229) being bound to the corresponding virtual one-time public key from the output file (227);
storing the virtual bound profile (229) in a secured storage (107; 234);
receiving for each real embedded SIM (303) a real embedded SIM identifier and a real one-time public key (305) of a real one-time key pair;
unbinding the virtual bound profile (229) retrieved from secured profile database (107; 234) with the virtual one-time key stored by the In-Factory Binding Box (101; 218) to obtain the profile, and re-binding (43) the profile to the real one-time public key (305) associated with the real embedded SIM (303); and
sending the real bound profile (307) to the embedded SIM (303) in order to be installed on the embedded SIM (303).

10. The In-Factory Binding Box (101; 218) according to claim 9, further comprising that communication with the profile manager (208) is made via an intermediary system (214).

11. The In-Factory Binding Box (101; 218) according to claim 10, wherein the In-Factory Binding Box (101; 218) is not connected to any external system apart from the intermediary system (214).

12. The In-Factory Binding Box (101; 218) according to any of claims 9-11, wherein the virtual bound profile is a batch of virtual bound profiles.
